# EUROPÄISCHE PATENTSCHRIFT

(11) **EP 0 331 180 B1**
(45) Veröffentlichungstag und Bekanntmachung des Hinweises auf die Patenterteilung: **07.02.1996**
(21) Anmeldenummer: 89103691.5
(22) Anmeldetag: 02.03.1989
(51) Int. Cl.: H02K 1/27, H02K 29/00

(54) **Elektrische Maschine**
Electric machine
Machine électrique

(30) Priorität: 02.03.1988 DE 3806760
(43) Veröffentlichungstag der Anmeldung: 06.09.1989
(73) Patentinhaber: HEIDELBERG MOTOR GESELLSCHAFT FUER ENERGIEKONVERTER MBH, D-82319 Starnberg (DE)
(72) Erfinder: Heidelberg, Götz, D-8136 Starnberg-Percha (DE); Ehrhart, Peter, Dr., D-8000 München 70 (DE); Gründl, Andreas, Dr., D-8000 München 70 (DE)
(74) Vertreter: Klunker . Schmitt-Nilson . Hirsch

(56) Entgegenhaltungen:
- FR-A- 2 473 803
- FR-A- 2 606 951
- US-A- 3 836 801
- US-A- 4 336 649
- US-A- 4 645 961
- PATENT ABSTRACTS OF JAPAN vol. 8, no. 161 (E-257) 1598 26 Juli 1984, & JP-A-59 59057 ( FANUC )

## Beschreibung

Die Erfindung bezieht sich auf eine elektrische Maschine, die einen Rotor mit einem dauermagnetischen Erregersystem und einen Stator mit einen Leitersystem aufweist, wobei Rotor und Stator längs einer Luftspalt-Wirkfläche relativ zueinander bewegbar sind.

Elektrische Maschinen dieser Art findet man am häufigsten als Gleichstrommotoren, bei denen an der Wirkfläche dauermagnetische Nordpole und Südpole miteinander abwechseln und bei denen der funktionserforderliche, magnetische Rückschluß zwischen benachbarten Magnetpolen entweder durch einen Eisenrücken auf der der Wirkfläche abgewandten Rückseite der Dauermagnete erfolgt oder dadurch, daß die Dauermagnete in unterschiedlicher Richtung magnetisierte Teilbereiche eines einheitlichen magnetischen Körpers sind. Der Stator weist das Leitersystem in der Regel in Form von Wicklungen oder Spulen, die einzelnen Polen zugeordnet sind, auf. Damit der Elektromotor laufen kann, muß die Stromrichtung in den einzelnen Wicklungen jeweils nach Relativbewegung von Stator und Rotor um eine bestimmte Strecke umgekehrt werden, was durch mechanische oder elektronische Kommutierung geschehen kann.

Der Erfindung liegt die Aufgabe zugrunde, eine elektrische Maschine der eingangs genannten Art verfügbar zu machen, die sich aufgrund ihrer Konstruktion mit höherer Drehmoment- und Leistungsdichte, bezogen auf das Gewicht oder das Volumen, bauen läßt.

Die erfindungsgemäße elektrische Maschine weist in Kombination folgende Merkmale auf:
(a) einen Stator mit einem Leitersystem und einen Rotor mit einem dauermagnetischen Erregersystem, wobei sich zwischen dem Stator und dem Rotor eine Luftspalt-Wirkfläche befindet;
(b) der Rotor ist als Außenrotor mit innenseitiger Wirkfläche ausgebildet;
(c) der Rotor weist - fortschreitend in Rotationsrichtung betrachtet - eine wechselnde Folge von in Rotationsrichtung magnetisierten Dauermagneten und magnetisch leitenden Materialbereichen auf;
(d) die Dauermagnete bestehen aus einem Material mit einer Permeabilität nahe der Permeabilität von Luft;
(e) in Rotationsrichtung gemessen, haben die Dauermagnete eine mit zunehmendem Abstand von der Wirkfläche zunehmende Breite und haben die magnetisch leitenden Bereiche eine mit zunehmendem Abstand von der Wirkfläche abnehmende Breite;
(f) die magnetisch leitenden Bereiche weisen jeweils eine der Wirkfläche zugewandte Magnetfluß-Austrittsfläche auf, die kleiner ist als die Summe der Magnetfluß-Querschnittsflächen der beiden anschließenden Dauermagnete, so daß der Magnetfluß der Dauermagnete für die Wirkfläche konzentriert wird;
(g) in Rotationsrichtung gemessen, sind die Pole des Stators jeweils nahezu gleich breit wie die Magnetfluß-Austrittsflächen der magnetisch leitenden Bereiche.

Aus dem Dokument US-A-3 836 801 ist eine elektrische Maschine bekannt, bei welcher der Stator so ausgebildet ist, wie durch die vorstehenden Merkmale (c), (e) und (f) für den Rotor der erfindungsgemäßen elektrischen Maschine festgelegt.

Aus dem Dokument US-A-4 336 649 ist es bekannt, am Innenrotor einer elektrischen Maschine - fortschreitend in Rotationsrichtung betrachtet - eine wechselnde Folge von in Rotationsrichtung magnetisierten Dauermagneten und magnetisch leitenden Materialbereichen vorzusehen. Die magnetisch leitenden Bereiche haben eine Magnetfluß-Austrittsfläche, die kleiner ist als die Summe der Magnetfluß-Querschnittsflächen der beiden anschließenden Dauermagnete, und die Dauermagnete haben, in Rotationsrichtung gemessen, eine mit zunehmendem Abstand von der Wirkfläche leicht zunehmende Breite. Der Gesichtspunkt der Magnetflußkonzentration durch die magnetisch leitenden Materialbereiche für die Wirkfläche ist in diesem Dokument nicht angesprochen.

Es ist eine für sich bekannte Maßnahme, den Rotor einer elektrischen Maschine als Außenrotor mit innenseitiger Wirkfläche und mit dauermagnetischem Erregersystem auszubilden (Merkmale (a) und (b)). Es ist bekannt, elektrische Maschinen mit Dauermagneten zu bauen, die eine Permeabilität nahe der Permeabilität von Luft haben (Merkmal (d)). Es ist schließlich bekannt, bei elektrischen Maschinen, in Rotationsrichtung gemessen, die Statorpolflächen im wesentlichen so breit auszuführen wie die Rotorpolflächen.

Bei herkömmlichen elektrischen Maschinen ohne Magnetflußkonzentration ist die magnetische Feldstärke der Dauermagnete des Erregersystems durch das verwendete Dauermagnetmaterial nach oben begrenzt und ist hierdurch eine obere Grenze für die Magnetflußdichte über die Wirkfläche gegeben. Wenn man nach Ausschöpfung dieser Parameter das Drehmoment einer herkömmlichen elektrischen Maschine erhöhen will, muß man die Wirkfläche vergrößern. Dies läuft bei einer rotierenden elektrischen Maschine auf einen größeren Durchmesser oder eine größere axiale Länge hinaus.

Durch die Erfindung wird über die Wirkfläche vom Rotor zum Stator führend eine Luftspaltfeldstarke erreicht, die wesentlich über der Remanenzfeldstärke der verwendeten Dauermagnete liegt. Der "Übersetzungsfaktor" des B-Felds ist im wesentlichen durch das Verhältnis der Größe der Magnetfluß-Querschnittsfläche eines Dauermagneten zur halben Magnetfluß-Austrittsfläche in die Wirkfläche des auf einer Seite an den Dauermagneten anschließenden, magnetisch leitenden Materialbereichs bestimmt. Der Übersetzungsfaktor kann problemlos größer als 1,2 oder größer als 1,3 oder größer als 1,5, ja sogar größer als 2,0 sein.

Wenn das B-Feld im Luftspalt größer ist, wird im Falle gleicher Maschinengröße die Windungszahl bei den Polen des Leitersystems erniedrigt. Aus der kleineren Windungszahl resultiert eine quadratisch niedrigere Induktivität im Stator. Dies bedeutet, daß bei unveränderter Drehzahl in der Maschine ein höherer Strom gewendet werden kann bzw. derselbe Strom bei höherer Drehzahl gewendet werden kann, wodurch die Leistung der Maschine entsprechend ansteigt.

Im anderen Falle ergibt sich die Möglichkeit, die rotierende Maschine beispielsweise axial kürzer zu bauen, ohne die im zweiten Funktionsteil induzierte EMK zu verkleinern und ohne die Induktivität zu verändern, so daß der Elektromotor weiterhin gleiche Leistung abgibt. Die geschilderten Umstände wirken dahingehend zusammen, daß man aufgrund der Erfindung bei gleichem Volumen oder Gewicht eine elektrische Maschine mit höherem Drehmoment oder höherer Leistung bzw. - im Fall des elektrischen Generators - mit höherer elektrischer Leistung bauen kann. Oder anders ausgedrückt: bei geforderter Leistung kann die Maschine kleiner und leichter sein.

Bei der erfindungsgemäßen elektrischen Maschine ergeben sich eine konstruktiv günstige Konfiguration, kleine Reluktanzeffekte und hohe Materialausnutzung.

Die Wirkfläche der Maschine ist zylindrisch, wenn sich der Stator und der Rotor radial gegenüberliegen. Somit ist die Relativbewegungsrichtung kreisförmig.

Die zur Wirkfläche gerichteten Magnetfluß-Austrittsflächen der magnetisch leitenden Materialbereiche sind in der Regel im Fall der rotierenden Maschine mit radial beabstandetem Rotor und Stator zylindrisch, müssen es aber nicht sein. Wenn die Magnetfluß-Austrittsflächen von diesen einfachen Geometrien abweichen, ist sinnvollerweise jeweils die Projektion der betreffenden Fläche auf die entsprechende vergleichsfläche der geschilderten einfachen Geometrie zu betrachten, um das im Anspruch 1 angesprochene Flächenverhältnis zu bestimmen. In der Regel sind die Dauermagnete des Erregersystems - fortschreitend in Relativbewegungsrichtung betrachtet - wechselnd gepolt, so daß auf den Südpol eines ersten Dauermagneten der Südpol eines zweiten Dauermagneten, auf den Nordpol des zweiten Dauermagneten der Nordpol eines dritten Dauermagneten, und auf den Südpol des dritten Dauermagneten der Südpol eines vierten Dauermagneten folgt, usw. Es sind jedoch Konfigurationen denkbar, bei denen keine derart strenge, wechselnde Folge der Magnetisierungsrichtung der Dauermagnete gegeben ist.

Nach einer bevorzugten Weiterbildung der Erfindung reicht die dem Stator zugewandte Fläche des Rotors - fortschreitend in Relativbewegungsrichtung betrachtet - wechselnd mehr oder weniger nah an das zweite Funktionsteil heran. Mit dieser Maßnahme läßt sich erreichen, daß bei bestimmten Relativstellungen von Rotor und Stator der Magnetfluß pro einzelnem magnetischen Kreis der Maschine maximal und bei anderen Relativstellungen kleiner als maximal ist. Bei kleinerem elektrisch induzierten Magnetfluß ist die Induktivität der Maschine zu dem entsprechenden Zeitpunkt kleiner, was zu denjenigen Zeiten günstig ist, zu denen die Stromrichtung im Leitersystem des Stators umgedreht wird. Wenn der elektrisch induzierte Magnetfluß maximal ist, ist zu dem entsprechenden Zeitpunkt bzw. in der entsprechenden Zeitspanne die Induktivität der Maschine maximal, was während derjenigen Zeitspanne günstig ist, in der dem Leitersystem Strom gleicher Richtung zugeführt wird. Dies gilt ganz besonders für Ausführungsformen der Maschine, bei denen in den Zeitspannen zwischen der Stromumkehr im Leitersystem dem Leitersystem Strom nicht zeitlich konstant zugeführt wird, sondern gepulst. Besonders günstig erreicht man die vorstehend abgehandelten Effekte, wenn die magnetisch leitfähigen Bereiche auf der der Wirkfläche zugewandten Seite jeweils in ihrem Mittelbereich näher an den Stator heranreichen, also dort die Weite des Luftspalts verkleinert ist. Oder anders ausgedrückt: Die magnetisch leitfähigen Bereiche sind auf der der Wirkfläche zugewandten Seite an ihren den beiden benachbarten Dauermagneten zugewandten Rändern derart ausgenommen, daß dort die Weite des Luftspalts größer ist.

Ähnliche Effekte kann man erzeugen, indem die magnetisch leitfähigen Bereiche - fortschreitend in Relativbewegungsrichtung betrachtet - aus Materialien unterschiedlicher magnetischer Leitfähigkeit zusammengesetzt sind. Konkret könnte man im mittleren Bereich jedes leitfähigen Materialbereichs ein Material hoher magnetischer Leitfähigkeit und in den beiden Randbereichen des magnetisch leitfähigen Materialbereichs ein Material niedrigerer magnetischer Leitfähigkeit vorsehen.

Günstigerweise können die Dauermagnete jeweils durchgehend aus dem gleichen Material bestehen, sind also vorzugsweise weder in Relativbewegungsrichtung noch quer zur Relativbewegungsrichtung schichtweise aus unterschiedlichen Materialien aufgebaut.

Besonders bevorzugte Dauermagnet-Materialien sind Materialien auf der Basis von Se-Co (Se = seltene Erden, insbesondere Samarium), Fe-Nd und bestimmte Ferrite. Dies verringert die Induktivität der Magnetkreise der Maschine.

Vorzugsweise ist die erfindungsgemäße Maschine elektronisch kommutiert. Derartige Maschinen zeichnen sich insbesondere durch optimale Regelbarkeit und Verschleißfreiheit aus. Gespeist werden kann ein derartiger Elektromotor im einfachsten Fall mit Gleichstrom, wobei vorzugsweise in den Zeitspannen zwischen der Stromwendung bzw. der Umkehr der Stromrichtung im Leitersystem des Stators eine Gleichspannung angelegt wird, die durch die elektronische Kommutierungseinrichtung zur Einhaltung einer gewünschten regelbaren, mittleren Stromhöhe zu- und weggeschaltet bzw. getaktet wird. Eine günstige niedrige Taktfrequenz ergibt sich bei der weiter vorn geschilderten hohen Induktivität der Maschine in den Zeitspannen zwischen der Stromwendung. Wenn zur Speisung eine Wechselstromquelle zur Verfügung steht, kann der Elektromotor aus einem Gleichspannungszwischenkreis gespeist werden.

Bei der erfindungsgemäßen elektrischen Maschine können Stator und Rotor auch zwei relativ zueinander bewegbare Funktionsteile sein, von denen keines stationär ist. Besonders bevorzugt ist jedoch, wenn der Rotor der bewegbare Teil der elektrischen Maschine ist, insbesondere weil dem Rotor kein Strom zugeführt werden muß.

Die Außenrotorbauweise der erfindungsgemäßen Maschine ist im Interesse eines möglichst großen Durchmessers der Wirkfläche und damit möglichst großen Drehmoments bei gegebenem Volumen günstig, weil der Erregerteil in der Regel radial weniger Raum beansprucht als das Leitersystem des zweiten Funktionsteils.

Da die erfindungsgemäße elektrische Maschine ohne magnetischen Rückschluß auf der der Wirkfläche abgewandten Rückseite des Erregersystems auskommt, ist es bevorzugt, die Dauermagnete und die magnetisch leitfähigen Bereiche formschlüssig miteinander zu verbinden und/oder auf der der Wirkfläche abgewandten Rückseite des Erregersystems ein Lastaufnahmeteil aus magnetisch nicht leitfähigem Material vorzusehen. Das Lastaufnahmeteil ist im wesentlichen zylindrisch. Das Lastaufnahmeteil läßt sich besonders günstig aus Kunststoff, insbesondere faserverstärktem Kunststoff, fertigen. Es ist es besonders günstig, in dem Lastaufnahmeteil eine ringförmige Bandage vorzusehen oder das Lastaufnahmeteil insgesamt als ringförmige Bandage auszubilden, die die Bauteile des Erregersystems gegen die Zentrifugalkraft zusammenhält. Lastaufnahmeteile können mit modernen Werkstoffen, insbesondere Faserwerkstoffen oder faserverstärkten Kunststoff-Werkstoffen, mit extrem hoher mechanischer Festigkeit bei geringem Volumen und geringem Gewicht gebaut werden.

Die Erfindung und Weiterbildungen der Erfindung werden im folgenden anhand von zeichnerisch dargestellten Ausführungsbeispielen noch näher erläutert. Es zeigen:
Fig. 1 schematisch eine elektrische Maschine mit Rotationsbewegung in einem Schnitt rechtwinklig zur Rotationsachse, wobei Teile weggelassen sind;
Fig. 2 einen Teil einer elektrischen Maschine mit Linearbewegung oder Rotationsbewegung, in einem Schnitt rechtwinklig zur Wirkfläche der Maschine und enthaltend die Relativbewegungsrichtung;
Fig. 3 eine im Vergleich zu Fig. 2 abgewandelte, elektrische Maschine in gleicher Schnittdarstellung;
Fig. 4 eine graphische Darstellung der Änderung der Induktivität der Maschine gemäß Fig. 3 bei sich ändernder Relativstellung von erstem und zweitem Funktionsteil.

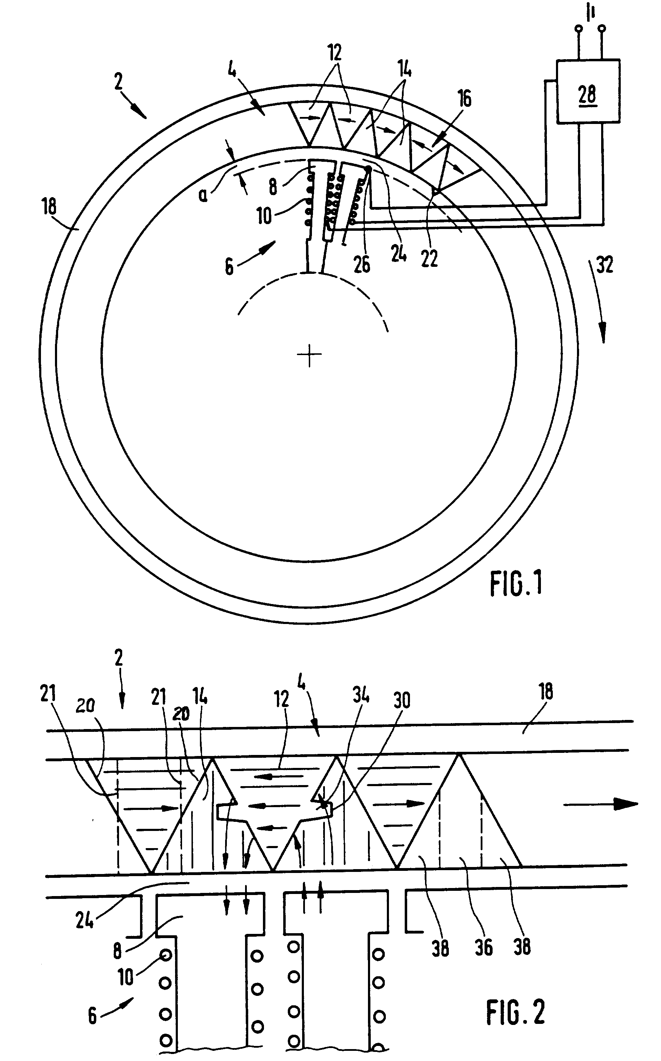

Die in Fig. 1 bis 3 schematisch dargestellten Maschinen können entweder ein Stromgenerator oder ein Elektromotor sein. Die folgende Beschreibung orientiert sich in erster Linie an dem Fall des Elektromotors, wobei jedoch aufgrunddessen das Verständnis eines entsprechend aufgebauten Generators für den Durchschnittsfachmann auf der Hand liegt.

Der in Fig. 1 dargestellte Elektromotor 2 ist ein Außen-rotormotor, bei dem sich ein im wesentlichen rohrförmiger Außenrotor als erstes Funktionsteil 4 um ein inneres, im wesentlichen zylindrisches, zweites Funktionsteil 6, nämlich den Stator des Elektromotors 2, drehen kann. Der Stator 6 weist ringförmig verteilt Statorpole 8 auf, die - bei Betrachtung eines bestimmten Zeitpunkts - in Umfangsrichtung fortschreitend abwechselnd ein elektromagnetischer Nordpol oder Südpol sind. Die Pole 8 sind jeweils mit einer Wicklung 10 versehen, und die Wicklungen 10 bilden das Leitersystem des Motors 2.

Am Rotor 8 sind innenseitig Dauermagnete 12 vorgesehen, die im Schnitt der Fig. 1 dreieckig mit radial nach innen weisender Spitze sind, wobei benachbarte Dauermagnete 12 radial außen mit ihren Rändern aneinanderstoßen. In Umfangsrichtung fortschreitend sind zwischen den Dauermagneten 12 jeweils magnetisch leitende Materialbereiche 14 vorgesehen, die im Schnitt der Fig. 1 im wesentlichen dreieckig mit radial nach außen weisender Spitze sind. Die Dauermagnete 12 und die Materialbereiche 14 haben, zusammen betrachtet, im Schnitt der Fig. 1 eine kreisringförmige Konfiguration und bilden das Erregersystem 16 des Motors 2. Radial außen sind die Dauermagnete 12 und die Materialbereiche 14 durch eine im wesentlichen kreisförmige, einfach oder mehrfach herumgelegte Bandage 18 umgeben, die beispielsweise aus im wesentlichen in Umfangsrichtung verlaufenden Glasfasern, Carbonfasern, Kevlar-Fäden oder Kunststoff oder mit derartigen Fasern verstärktem Kunststoff besteht.

Zwischen dem Innenumfang des Rotors 4 und dem Außenumfang des Stators 6 befindet sich eine im wesentlichen zylindrische Wirkfläche mit einer radialen Weite a, die üblicherweise als Luftspaltweite bezeichnet wird. Die Wirkfläche ist strenggenommen keine zweidimensionale Fläche, sondern eine "Wirkschicht" mit einer nicht notwendigerweise überall gleichen Dicke, gemessen senkrecht zur Relativbewegungsrichtung.

In Umfangsrichtung gemessen sind die einzelnen Pole 8 nahezu gleich breit wie die Materialbereiche 14 radial innen.

Die Dauermagnete 12 bestehen jeweils durchgehend bzw. insgesamt aus dem gleichen Material und sind im wesentlichen in Umfangsrichtung des Rotors 4 magnetisiert, wie durch die eingezeichneten Pfeile angedeutet, so daß - in Umfangsrichtung fortschreitend - auf einen Dauermagneten 12 mit im Uhrzeigersinn weisendem Nordpol ein Dauermagnet 12 mit entgegen dem Uhrzeigersinn weisenden Nordpol folgt usw. Da bei jedem betrachteten Materialbereich 14 die Summe der Magnetfluß-Querschnittsflächen der beiden, in Umfangsrichtung benachbarten Dauermagneten 12 größer ist als seine Magnetfluß-Austrittsfläche 22 in die Wirkfläche 24, herrscht in der Wirkfläche 24 eine erheblich über der Remanenzfeldstärke der Dauermagnete 12 liegende magnetische Feldstärke.

Mit 26 ist ein am Außenumfang des Stators 6 befestigter Sensor bezeichnet, der auf die Magnetfelder der vorbeibewegten Dauermagnete 12 anspricht, wodurch die Relativstellung von Rotor 4 und Stator 6 erfaßt wird. Die Signale des Sensors 26 werden einer Steuereinheit 28 zugeführt, die eine Speisungsgleichspannung für das Leitersystem zu demjenigen Zeitpunkt umpolt, wenn sich, wie in Fig. 1 gezeichnet, die Statorpole 8 jeweils gerade mittig gegenüber den Materialbereichen 14 befinden. Alternativ kann man einen zusammen mit dem Rotor 4 rotierenden Ring mit Steuerungs-Dauermagneten vorsehen, auf die der Sensor 26 anspricht.

Wenn die Maschine als Generator gebaut ist, ist keine elektronische Steuerung zur Kommutierung erforderlich, kann aber vorhanden sein, um den erzeugten Strom sozusagen im Generator gleichzurichten.

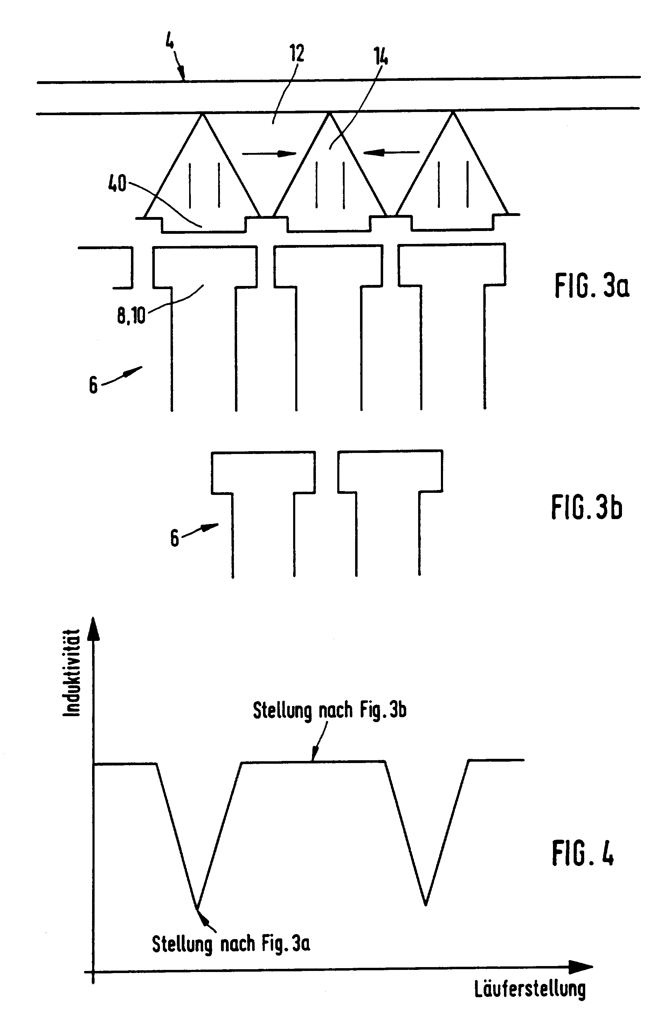

In den Fig. 2 und 3 sind die geschilderten, grundsätzlichen Verhältnisse nochmals in größerem Maßstab dargestellt und sind weitere zusätzliche, bevorzugte Einzelheiten veranschaulicht. Die gezeichnete Darstellung des ersten Funktionsteils 4 in einer Ebene kann man als Abwicklung eines Rotationsmotors gemäß Fig. 1 verstehen.

Es sind die zu einem magnetischen Kreis des Motors 2, bestehend aus einem Dauermagneten 12, einem halben Materialbereich 14 links davon, einem halben Materialbereich 14 rechts davon und zwei halben Elektromagneten 8, 10, gehörenden Magnetflußlinien 30 eingezeichnet. Ferner sind bei einem Dauermagneten 12 an zwei Stellen Magnetfluß-Querschnittsflächen 21 rechtwinklig zur Wirkfläche 24 eingezeichnet. Die jeweilige Querschnittsfläche 21 kann man sich als Projektion der betreffenden Anschlußfläche 20 an den angrenzenden Materialbereich 14 in Relativbewegungsrichtung vorstellen. Man erkennt die Magnetflußkonzentration von den Magnetfluß-Querschnittsflächen 21 der Dauermagnete 12 in den entsprechenden Teil der Wirkfläche 24.

Außerdem erkennt man, daß die Dauermagnete beidseits jeweils eine sich in Relativbewegungsrichtung 32 erstreckende Nase 34 aufweisen, mit denen sie in entsprechende Nuten 30 der Materialbereiche 14 greifen. Zur Montage werden die Dauermagnete 12 und die Materialbereiche 14 senkrecht zur Zeichenebene der Fig. 2 zusammengeschoben. Auf diese Weise entsteht eine gegenseitige, formschlüssige Verankerung der Dauermagnete 12 und der Materialbereiche 14. Insbesondere bei weniger hoch belasteten Motoren kann dadurch das der Bandage von Fig. 1 entsprechende Lastaufnahmeteil 18 weniger stark oder entbehrlich sein.

Ferner ist die Möglichkeit eingezeichnet, daß die Materialbereiche 14 im mittleren Bereich aus einem Material 36 sehr hoher magnetischer Leitfähigkeit bestehen und in ihren, in Fig. 2 eingezeichneten linken und rechten Randbereichen jeweils aus einem Material 38 mit geringerer magnetischen Leitfähigkeit.

In Fig. 3 ist eine Ausführungsform dargestellt, bei der abweichend von den bisher beschriebenen Ausführungsformen die dem zweiten Funktionsteil 6 zugewandte Fläche des ersten Funktionsteils 4 so gestaltet ist, daß die Weite a des Luftspalts jeweils im mittleren Bereich der Materialbereiche 14 kleiner als in den Randbereichen der Materialbereiche 14 ist. Es ergeben sich somit Vorsprungsbereiche 40, die näher an das zweite Funktionsteil 6 heranreichen als die Bereiche dazwischen. Hierdurch wird erreicht, daß in der in Fig. 3a gezeichneten Stellung die Induktivität des Motors besonders klein ist, was einem raschen Stromaufbau in den Wicklungen 10 nach der Spannungsumkehrung durch die Steuereinheit 28 förderlich ist.

Wenn hingegen, wie in Fig. 3b gezeichnet, die Pole 8 jeweils mit ihrer Mitte der der Wirkfläche 24 zugewandten, ggf. abgeflachten Spitze eines Dauermagneten 12 gegenüberliegen ist die Induktivität des Motors höher, was insbesondere für die Versorgung des Motors mit gepulstem Gleichstrom günstiger ist. Diese Verhältnisse sind in Fig. 4 graphisch veranschaulicht.

## Patentansprüche

1. Elektrische Maschine (2), aufweisend in Kombination folgende Merkmale:
(a) einen Stator (6) mit einem Leitersystem (10) und einen Rotor (4) mit einem dauermagnetischen Erregersystem (12), wobei sich zwischen dem Stator (6) und dem Rotor (4) eine Luftspalt-Wirkfläche (24) befindet;
(b) der Rotor ist als Außenrotor mit innenseitiger Wirkfläche (24) ausgebildet;
(c) der Rotor (4) weist - fortschreitend in Rotationsrichtung (32) betrachtet - eine wechselnde Folge von in Rotationsrichtung (32) magnetisierten Dauermagneten (12) und magnetisch leitenden Materialbereichen (14) auf;
(d) die Dauermagnete (12) bestehen aus einem Material mit einer Permeabilität nahe der Permeabilität von Luft;
(e) in Rotationsrichtung gemessen, haben die Dauermagnete (12) eine mit zunehmendem Abstand von der Wirkfläche (24) zunehmende Breite und haben die magnetisch leitenden Bereiche (14) eine mit zunehmendem Abstand von der Wirkfläche (24) abnehmende Breite;
(f) die magnetisch leitenden Bereiche (14) weisen jeweils eine der Wirkfläche (24) zugewandte Magnetfluß-Austrittsfläche (22) auf, die kleiner ist als die Summe der Magnetfluß-Querschnittsflächen (21) der beiden anschließenden Dauermagnete (12), so daß der Magnetfluß der Dauermagnete (12) für die Wirkfläche (24) konzentriert wird;
(g) in Rotationsrichtung gemessen, sind die Pole (8) des Stators (6) jeweils nahezu gleich breit wie die Magnetfluß-Austrittsflächen (22) der magnetisch leitenden Bereiche (14).

2. Elektrische Maschine nach Anspruch 1,
**dadurch gekennzeichnet**,
daß die Dauermagnete (12), im Querschnitt rechtwinklig zur Rotationsachse des Rotors (4) betrachtet, im wesentlichen dreieckig sind.

3. Elektrische Maschine nach Anspruch 1 oder 2,
**dadurch gekennzeichnet**,
daß die magnetisch leitenden Bereiche (14), im Querschnitt rechtwinklig zur Rotationsachse des Rotors (4) betrachtet, im wesentlichen dreieckig sind.

4. Elektrische Maschine nach einem der Ansprüche 1 bis 3,
dadurch gekennzeichnet,
daß die Dauermagnete (12) jeweils durchgehend aus dem gleichen Material bestehen.

5. Elektrische Maschine nach einem der Ansprüche 1 bis 4,
dadurch gekennzeichnet,
daß die magnetisch leitfähigen Bereiche (14) - fortschreitend in Rotationsrichtung (32) betrachtet - aus Materialien unterschiedlicher magnetischer Leitfähigkeit zusammengesetzt sind.

6. Elektrische Maschine nach einem der Ansprüche 1 bis 5,
dadurch gekennzeichnet,
daß sie elektronisch kommutiert ist.

7. Elektrische Maschine nach einem der Ansprüche 1 bis 6,
dadurch gekennzeichnet,
daß die dem Stator (6) zugewandte Fläche des Rotors (4) - fortschreitend in Rotationsrichtung (32) betrachtet - wechselnd mehr oder weniger nah an den Stator (6) heranreicht.

8. Elektrische Maschine nach Anspruch 7,
dadurch gekennzeichnet,
daß die magnetisch leitfähigen Bereiche (14) jeweils in der Mitte einen näher an Stator (6) heranreichenden Vorsprung (40) haben.

9. Elektrische Maschine nach einem der Ansprüche 1 bis 8,
dadurch gekennzeichnet,
daß die Dauermagnete (12) und die magnetisch leitfähigen Bereiche (14) formschlüssig miteinander verbunden sind.

10. Elektrische Maschine nach einem der Ansprüche 1 bis 9,
dadurch gekennzeichnet,
daß an der der Wirkfläche (24) abgewandten Rückseite der Dauermagnete (12) und der magnetisch leitfähigen Bereiche (14) ein Lastaufnahmeteil (18) aus magnetisch nicht leitfähigem Material vorgesehen ist.

11. Elektrische Maschine nach Anspruch 10,
dadurch gekennzeichnet,
daß das Lastaufnahmeteil (18) aus, vorzugsweise faserverstärktem, Kunststoff gefertigt ist.

12. Elektrische Maschine nach Anspruch 10 oder 11,
dadurch gekennzeichnet,
daß das Lastaufnahmeteil (18) eine außen um den Rotor (4) herumgelegte Bandage aufweist.

## Claims

1. An electric machine (2) comprising the following features in combination:
(a) a stator (6) having a conductor system (10) and a rotor (4) having a permanent-magnetic excitation system (12), with an air gap active area (24) being provided between stator (6) and rotor (4);
(b) the rotor is designed as external rotor having the active area (24) formed on its inside;
(c) the rotor (4) has - as seen advancing in the direction of rotation (32) - an alternating sequence of permanent magnets (12) magnetized in the direction of rotation (32) and of magnetically conductive material portions (14);
(d) the permanent magnets (12) consist of a material having a permeability close to the permeability of air;
(e) as measured in the direction of rotation, the permanent magnets (12) are of increasing width with increasing distance from the active area (24) and the magnetically conductive portions (14) are of decreasing width with increasing distance from the active area (24);
(f) the magnetically conductive portions (14) each have a magnetic flux exit area (22) which faces said active area (24) and is smaller than the sum of the magnetic flux cross-sectional areas (21) of the two adjoining permanent magnets (12) such that the magnetic flux of the permanent magnets (12) is concentrated for the active area (24);
(g) as measured in the direction of rotation, the poles (8) of the stator (6) each have almost the same width as the magnetic flux exit areas (22) of the magnetically conductive portions (14).

2. An electric machine according to claim 1,
characterized in that the permanent magnets (12), as seen in a cross-section perpendicularly to the axis of rotation of the rotor (4), are substantially of triangular configuration.

3. An electric machine according to claim 1 or 2,
characterized in that the magnetically conductive portions (14), as seen in a cross-section perpendicularly to the axis of rotation of the rotor (4), are substantially of triangular configuration.

4. An electric machine according to any one of claims 1 to 3,
characterized in that the permanent magnets (12) each consist throughout of the same material.

5. An electric machine according to any one of claims 1 to 4,
characterized in that the magnetically conductive portions (14) - as seen advancing in the direction of rotation (32) - are composed of materials of different magnetic conductivity.

6. An electric machine according to any one of claims 1 to 5,
characterized in that it is electronically commutated.

7. An electric machine according to any one of claims 1 to 6,
characterized in that the area of the rotor (4) facing the stator (6) - as seen advancing in the direction of rotation (32) - in alternating manner extends more or less close towards the stator (6).

8. An electric machine according to claim 7,
characterized in that the magnetically conductive portions (14) are each formed in their centre with a projection (40) extending closer to the stator (6).

9. An electric machine according to any one of claims 1 to 8,
characterized in that the permanent magnets (12) and the magnetically conductive portions (14) are connected to each other in positive manner.

10. An electric machine according to any one of claims 1 to 9,
characterized in that the rear side of the permanent (12) and of the magnetically conductive portions (14) which faces away from the active area (24) is provided with a load receiving member (18) of magnetically non-conductive material.

11. An electric machine according to claim 10,
characterized in that the load receiving member (18) is made of, preferably fibre-reinforced, plastics material.

12. An electric machine according to claim 10 or 11,
characterized in that the load receiving member (18) comprises a band placed around the outside of the rotor (4).

## Revendications

1. Machine électrique (2), présentant en combinaison les caractéristiques suivantes :
(a) un stator (6) comprenant un système de conducteurs (10) et un rotor (4) pourvu d'un système d'excitation présentant une aimantation permanente (12), une surface active d'entrefer se trouvant entre le stator (6) et le rotor (4);
(b) le rotor est un rotor extérieur à surfaces actives intérieures (24);
(c) le rotor (4) présente, considérés en avançant dans la direction de la rotation (32), une suite alternative d'aimants permanents (12) aimantés dans la direction de la rotation (32) et de zones de matériau magnétiquement conducteur (14);
(d) les aimants permanents (12) sont constitués d'un matériau ayant une permittivité proche de la permittivité de l'air;
(e) les aimants permanents (12) ont une largeur, mesurée dans la direction de la rotation, allant en croissant en s'éloignant de la surface active (24) et les zones magnétiquement conductrices (14) ont une largeur allant en décroissant en s'éloignant de la surface active (24);
(f) les zones magnétiquement conductrices (14) présentent chacune une surface de sortie du flux magnétique (22) tournée vers la surface active (24), qui est inférieure à la somme des surfaces de la section du flux magnétique (21) des deux aimants permanents (12) reliés, de façon que le flux magnétique des aimants permanents (12) pour la surface active (24) soit concentré;
(g) les pôles (8) du stator (6) sont, mesurés dans la direction de la rotation, presque aussi larges que les surfaces de sortie du flux magnétique (22) des zones magnétiquement conductrices (14).

2. Machine électrique selon la revendication 1,
caractérisée en ce que les aimants permanents (12) sont sensiblement triangulaires vus en coupe perpendiculairement à l'axe de rotation du rotor (4).

3. Machine électrique selon la revendication 1 ou 2,
caractérisée en ce que les zones magnétiquement conductrices (14) sont sensiblement triangulaires vues en coupe perpendiculairement à l'axe de rotation du rotor (4).

4. Machine électrique selon l'une quelconque des revendications 1 à 3,
caractérisée en ce que les aimants permanents (12) sont chacun constitués d'un bout à l'autre du même matériau.

5. Machine électrique selon l'une quelconque des revendications 1 à 4,
caractérisée en ce que les zones magnétiquement conductrices (14) sont, considérées en avançant dans la direction de la rotation (32), composées de matériaux de conductibilités magnétiques différentes.

6. Machine électrique selon l'une quelconque des revendications 1 à 5,
caractérisée en ce que sa commutation est effectuée électroniquement.

7. Machine électrique selon l'une quelconque des revendications 1 à 6,
caractérisée en ce que la surface du rotor (4) tournée vers le stator (6), considérée en avançant dans la direction de la rotation (32), s'avance alternativement plus ou moins près du stator (6).

8. Machine électrique selon la revendication 7,
caractérisée en ce que les zones magnétiquement conductrices (14) ont chacune en leur milieu une partie en saillie (4) s'avançant plus près du stator (6)

9. Machine électrique selon l'une quelconque des revendications 1 à 8,
caractérisée en ce que les aimants permanents (12) et les zones magnétiquement conductrices (14) sont liés mécaniquement entre eux.

10. Machine électrique selon l'une quelconque des revendications 1 à 9,
caractérisée en ce qu' une pièce d'absorption de charge (18) en matériau magnétiquement isolant est disposée sur la face arrière opposée à la surface active (24) des aimants permanents (12) et des zones magnétiquement conductrices (14).

11. Machine électrique selon la revendication 10,
caractérisée en ce que la pièce d'absorption de charge (18) est réalisée en matière plastique, de préférence armée par fibres.

12. Machine électrique selon la revendication 10 ou 11,
caractérisée en ce que la pièce d'absorption de charge (18) présente une frette entourant extérieurement le rotor (4).
